# EUROPÄISCHE PATENTSCHRIFT

(11) **EP 3 969 302 B1**
(45) Veröffentlichungstag und Bekanntmachung des Hinweises auf die Patenterteilung: **15.11.2023**
(21) Anmeldenummer: 20723430.3
(22) Anmeldetag: 11.05.2020
(51) Int. Cl.: B60J 1/02, B60Q 1/00, B60Q 1/14, G01J 1/02, G01J 1/04, G01J 1/42

(54) **VERGLASUNGSEINHEIT EINES FAHRZEUGS ODER GEBÄUDES SOWIE VERGLASUNGSANORDNUNG**
GLAZING UNIT OF A VEHICLE OR BUILDING, AS WELL AS GLAZING ASSEMBLY
UNITÉ DE VITRAGE D'UN VÉHICULE OU D'UN BÂTIMENT, AINSI QU'AGENCEMENT DE VITRAGE

(30) Priorität: 14.05.2019 EP 19174264
(43) Veröffentlichungstag der Anmeldung: 23.03.2022
(73) Patentinhaber: Saint-Gobain Glass France, 92400 Courbevoie (FR)
(72) Erfinder: VARGA, Gabor, 52134 Herzogenrath (DE); STELZER, Richard, 52066 Aachen (DE); CRAIG, Doane, Shelby, 52134 Herzogenrath (DE); EFFERTZ, Christian, 52080 Aachen (DE); HAMMOUD, Rayan, 51065 Köln (DE)
(74) Vertreter: Gebauer, Dieter Edmund
(86) Internationale Anmeldenummer: PCT/EP2020/062977
(87) Internationale Veröffentlichungsnummer: WO 2020/229383

(56) Entgegenhaltungen:
- EP-A1- 3 255 396
- WO-A1-2017/097536
- DE-T5-112016 001 021

## Beschreibung

Die Erfindung betrifft eine Verglasungseinheit eines Fahrzeugs oder Gebäudes mit mindestens einer strahlungsdurchlässigen Glas- oder Kunststoffscheibe und zwei oder drei auf der dem Strahlungseinfall abgewandten Seite der Glas- oder Kunststoffscheibe angeordneten Strahlungsdetektoren. Sie betrifft des Weiteren eine mit einer solchen Verglasungseinheit gebildete Verglasungsanordnung.

Zeitgemäße Fahrzeug- und Gebäudeverglasungen werden zunehmend als "intelligente" Verglasungen ausgeführt, deren optische Eigenschaften mindestens in Teilabschnitten veränderbar sind und/oder die Sensoren aufweisen, mit deren Signalen entweder Eigenschaften der Verglasung oder sogar andere Funktionen im Fahrzeug oder Gebäude gesteuert werden können. Es ist in diesem Zusammenhang u.a. bekannt, Feuchtigkeitssensoren (sog. Regensensoren) oder Sensoren für äußeren Lichteinfall (Lichtsensoren) in der Windschutzscheibe von Kraftfahrzeugen anzuordnen. Mittels eines Regensensors kann insbesondere die Scheibenwischerfunktion und mittels eines Lichtsensors die Ein- und Ausschaltung der Scheinwerfer gesteuert werden. In neuerer Zeit werden die Signale der genannten und ähnlicher Sensoren auch für zusätzliche Aufgaben genutzt, wie etwa für die Aktivierung einer Scheibenheizung, falls die Scheibe zugefroren oder beschlagen ist, oder für komplexere Steuerungen der Funktion moderner Scheinwerfer, etwa vom Matrix-LED-Typ.

Insbesondere für den letztgenannten Aufgabenbereich, grundsätzlich aber auch für die Steuerung integrierter elektronischer Sonnenblenden in Fahrzeug- oder Gebäudeverglasungen, ist es wünschenswert, nicht nur die Beleuchtungsstärke auf der Scheibe zu kennen, sondern auch die Richtung des Lichteinfalls zu berücksichtigen.

DE 112016001021 T5 und EP 3255396 A1 zeigen jeweils einen an der Windschutzscheibe eines Fahrzeugs angebrachten optischen Sensor, bei dem stets vier Lichterfassungselemente entlang einer Kreislinie angeordnet sind. Der Raumwinkel, aus dem die Lichterfassungselemente Licht empfangen können, ist durch kreisrunde Öffnungen über den Lichterfassungselementen begrenzt. WO 2017/097536 zeigt Fotodioden unterhalb eines schwarzen Abdeckdrucks, wobei die Emaille an den Stellen der Fotodioden Löcher aufweist, so dass Licht zu den Fotodioden gelangen kann.

Der Erfindung liegt die Aufgabe zu Grunde, eine verbesserte Verglasungseinheit, mit der Informationen über die Richtung des Lichteinfalls gewonnen werden können, bereitzustellen.

Diese Aufgabe wird durch eine Verglasungseinheit mit den Merkmalen des unabhängigen Patentanspruchs gelöst. Zweckmäßige Fortbildungen des Erfindungsgedankens sind Gegenstand der jeweiligen abhängigen Patentansprüche.

Die Erfindung betrifft eine Verglasungseinheit eines Fahrzeugs oder Gebäudes gemäß Patentanspruch 1.

Die Erfindung schließt den Gedanken ein, einen Lichtsensor oder, allgemeiner gesagt, Strahlungsdetektor (für sichtbares Licht, Infrarotstrahlung und/oder UV-Strahlung) in einer Verglasungseinheit derart zu konfigurieren, dass er für einen Lichteinfall (allgemeiner: Strahlungseinfall) aus mindestens einem vorbestimmten Raumbereich unempfindlich wird bzw. lediglich Licht bzw. Strahlung aus den verbleibenden Raumrichtungen detektiert. Sie schließt weiterhin den Gedanken ein, hierzu eine Art feststehende Blende oder auch eine Mehrzahl von Blenden über dem strahlungsempfindlichen Detektionsabschnitt des Strahlungsdetektors anzuordnen, die die gewünschte richtungsabhängige Blockierung des Strahlungseinfalls bewirkt.

Erfindungsgemäß ist die strahlungsdichte Abdeckung als geschlossene flächige Abdeckung mit Abstand über einer Teilfläche des Detektionsabschnitts ausgeführt. Bekanntermaßen ist die Richtwirkung einer solchen flächig geschlossenen Blende (Abdeckung) vom Abstand zwischen dieser und der Oberfläche des Detektionsabschnitts abhängig und wächst mit zunehmendem Abstand an.

Selbstverständlich beeinflusst auch das Flächen-Verhältnis zwischen der Abdeckfläche und der Fläche des Detektionsabschnitts die Richtwirkung, und in der praktischen Ausführung der Erfindung ist zwischen den genannten Größen ein Kompromiss zu finden, um einerseits eine brauchbare Signalamplitude des Strahlungsdetektors verfügbar zu haben und andererseits die gewünschte Richtwirkung zu erzielen. Die erwähnte geschlossene flächige Abdeckung kann auch mehrere in sich geschlossene Abschnitte umfassen, zwischen denen der Detektionsabschnitt unbedeckt und somit strahlungsempfindlich bleibt, und die geometrische Gestalt der flächigen Abdeckungen kann in Abhängigkeit von der gewünschten Detektorfunktion variabel gewählt werden, also ebenso geradlinige wie gekrümmte Begrenzungskanten aufweisen.

Erfindungsgemäß umfasst die Verglasungseinheit eine Strahlungsdetektor-Gruppe aus drei Strahlungsdetektoren, deren Abdeckungen derart aufeinander abgestimmt bezüglich des jeweiligen Strahlungsdetektors platziert sind, dass für die einzelnen Strahlungsdetektoren Strahlungseinfall aus unterschiedlichen Richtungsbereichen (Raumbereichen) blockiert wird. Erfindungsgemäß sind die Abdeckungen so ausgebildet, dass die, insbesondere gleichen, (drei) Raumbereiche mit gleichen Winkelabständen (d.h. jeweiliger Winkelabstand 120°) zueinander versetzt angeordnet sind. Dies bedeutet, dass jeweilige Mittenachsen der Raumbereiche, zumindest in der Projektion auf eine Ebene, in der die Strahlungsdetektoren angeordnet sind, in einem Winkel von 120° zueinander versetzt angeordnet sind.

Mittels zweier Strahlungsdetektoren kann die Position und insbesondere die Änderung einer Position einer Strahlungsquelle erfasst werden. Dies setzt voraus, dass die Strahlungsintensität (Helligkeit) einer Strahlungsquelle unverändert bleibt. Ein grundsätzliches Problem bei der Erfassung der Position einer Strahlungsquelle ist die Zweideutigkeit, welche sich bei einer erfassten Änderung der Intensität der Strahlungsquelle ergeben kann. Mit anderen Worten, es ist nicht klar, ob eine erfasste Intensitätsänderung auf einer Ortsänderung der Leuchtquelle oder einer Änderung der Intensität der Strahlungsquelle (Leuchtquelle) selbst basiert. Diese Zweideutigkeit kann in der erfindungsgemäßen Verglasungseinheit in einfacher Weise mittels dreier Strahlungsdetektoren durch eine differenzielle Auswertung der Messwerte aufgelöst werden. Drei Strahlungsdetektoren ermöglichen somit stets eine Erfassung der Position einer Strahlungsquelle, ohne dass die Strahlungsintensität der Strahlungsquelle konstant bleiben muss. Im Unterschied zum Stand der Technik, wo vier Strahlungsdetektoren eingesetzt werden, kommt die erfindungsgemäße Verglasungseinheit mit nur drei Strahlungsdetektoren aus. Die Erfindung schafft somit eine Neuerung, die erheblich einfacher und kostengünstiger zu realisieren ist als die bekannten Anordnungen, jedoch zumindest mit drei Strahlungsdetektoren eine selbe Funktionalität bei der Auflösung der genannten Zweideutigkeit bei der Positionsbestimmung einer Leuchtquelle bietet.

Generell können die Strahlungsdetektoren in beliebiger Weise, d.h. auch unregelmäßig, angeordnet sein. Erfindungsgemäß ist nicht die Anordnung der Strahlungsdetektoren relevant, sondern vielmehr die Verschiedenheit und Ausrichtung der Raumbereiche, aus denen die Strahlungsdetektoren Strahlung empfangen können. Erfindungsgemäß sind die Strahlungsdetektoren auf einer Kreislinie angeordnet. Erfindungsgemäß sind die drei, insbesondere baugleichen, Strahlungsdetektoren um 120° versetzt auf einer Kreislinie angeordnet, was fertigungstechnische Vorteile haben kann.

Erfindungsgemäß umfasst die Verglasungseinheit eine Außenscheibe und eine Innenscheibe, die über eine thermoplastische Zwischenschicht miteinander verbunden sind, wobei die Strahlungsdetektoren in die Zwischenschicht eingelagert sind und die Abdeckungen auf der Innenfläche der Außenscheibe oder auf der Außenseite der Zwischenschicht angeordnet sind. Die Abdeckungen der Strahlungsdetektoren werden durch eine einzelne zusammenhängende Schicht), nämlich eine ringförmige Schicht, gebildet. Hierbei sind drei Strahlungsdetektoren um 120° versetzt auf einer Kreislinie angeordnet und die Abdeckungen der Strahlungsdetektoren sind durch eine ringförmige Schicht gebildet, wobei sich die strahlungsempfindlichen Detektionsabschnitte der Strahlungsdetektoren innerhalb des Lochs der ringförmigen Schicht befinden. Dies ermöglicht eine besonders einfache und kostengünstige Herstellung der Verglasungseinheit.

Innerhalb der Verglasungseinheit ist die partielle strahlungsdichte Abdeckung in technologisch vorteilhafter Weise insbesondere mittels eines Siebdruck- oder ähnlichen Masken-Beschichtungsverfahrens der (Außen-)Scheibe gebildet, und zwar normalerweise auf deren Innenfläche. Unabhängig von der Verglasungseinheit kann die strahlungsdichte Abdeckung aber auch auf dem Strahlungsdetektor selbst gebildet sein, und zwar ist sie dann insbesondere auf eine strahlungsdurchlässige Deckschicht auf dem Detektionsabschnitt des Strahlungsdetektors aufgebracht. Es handelt sich bei üblichen Strahlungsdetektoren, die in ein Gehäuse verkapselt sind, hierbei um die obere Gehäusefläche.

In der Strahlungsdetektor-Gruppe kann insbesondere auch vorgesehen sein, dass Strahlungsdetektoren mit unterschiedlicher spektraler Empfindlichkeit eingesetzt werden. Es kann also etwa neben zwei Fotodioden für sichtbares Licht ein IR-Detektor vorhanden sein, so dass differenziert ein richtungsabhängiger Einfall von Licht und ein richtungsabhängiger Einfall von IR-Strahlung erfasst und ausgewertet und für Steuerungsaufgaben im Fahrzeug oder Gebäude herangezogen werden kann.

Die Strahlungsdetektoren können auf einem gemeinsamen Träger angeordnet sein, was die Fertigung der Verglasungseinheit erleichtern kann.

Die Erfindung erstreckt sich weiterhin auf eine Verglasungsanordnung eines Fahrzeugs oder Gebäudes, umfassend eine erfindungsgemäße Verglasungseinheit und eine mit dem Ausgang jedes Strahlungsdetektors verbundene Auswertungseinheit, die zur verknüpften Auswertung der Signale der mehreren Strahlungsdetektoren der Strahlungsdetektor-Gruppe zur Bestimmung der Richtung des Strahlungseinfalls auf die Verglasungseinheit ausgebildet ist.

Ferner erstreckt sich die Erfindung auf ein Fahrzeug oder Gebäude mit einer erfindungsgemäßen Verglasungseinheit bzw. mit einer erfindungsgemäßen Verglasungsanordnung. In einer für ein Straßenfahrzeug wie einen PKW geeigneten Ausführung umfasst die Verglasungseinheit eine Außenscheibe und eine Innenscheibe, die über eine thermoplastische Zwischenschicht miteinander verbunden sind, wobei der Strahlungsdetektor in die Zwischenschicht eingelagert ist und die strahlungsdichte Abdeckung auf der Innenfläche der Außenscheibe oder auf der oder in der Außenseite der Zwischenschicht angeordnet oder erzeugt ist. Eine solche Verglasungseinheit ist insbesondere als Frontscheibe bzw. Windschutzscheibe oder als Dachverglasung ("Panoramadach") eines PKW vorteilhaft einsetzbar.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Fig. 1: eine schematische Darstellung einer Verglasungsanordnung eines PKW, in der die Erfindung angewendet werden kann,
- Fig. 2A und 2B: eine schematische Querschnittdarstellung bzw. Draufsicht eines Fotodioden-Bauelementes als Ausführung eines Strahlungsdetektors, bei dem die Erfindung angewendet werden kann,
- Fig. 3: eine schematische Darstellung (Querschnittansicht) einer ersten Ausführung der Erfindung,
- Fig. 4: eine schematische Darstellung (Querschnittansicht) einer Ausgestaltung, welche nicht Teil der Erfindung ist,
- Fig. 5: eine partielle Querschnittdarstellung einer erfindungsgemäßen Verglasungseinheit und
- Fig. 6: eine schematische Draufsicht auf eine Ausgestaltung einer Strahlungsdetektorgruppe,
- Fig. 7: eine schematische Draufsicht auf eine weitere Ausgestaltung einer Strahlungsdetektorgruppe, welche in den Patentansprüchen nicht beansprucht ist,
- Fig. 8: eine schematische Draufsicht auf eine weitere Ausgestaltung einer Strahlungsdetektorgruppe, welche in den Patentansprüchen nicht beansprucht ist.

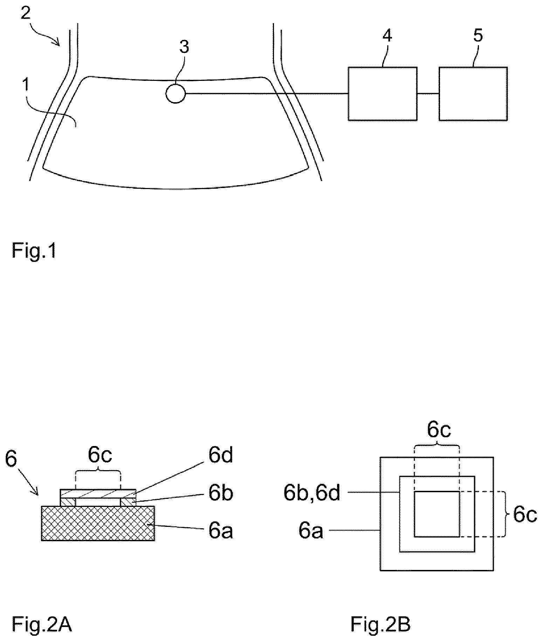

Fig. 1 zeigt schematisch eine Verglasungseinheit (Frontscheibe) 1 eines PKW 2, die eine Lichtsensoreinheit 3 im oberen mittleren Bereich eingebaut hat. Die Lichtsensoreinheit 3 ist signalmäßig mit einer Auswertungseinheit 4 verbunden, die Ausgangssignale der Lichtsensoreinheit empfängt und gemäß einem einprogrammierten Verarbeitungsalgorithmus verarbeitet. Diese stellt letztlich ein Steuersignal für eine Steuerbaugruppe 5 des PKW, beispielsweise zur Steuerung der Scheinwerfer in Abhängigkeit von auf die Verglasungseinheit 1 einfallendem Licht von entgegenkommenden Fahrzeugen o.ä. bereit.

Fig. 2A und 2B zeigen schematisch in einer Schnittansicht bzw. Draufsicht ein Fotodioden-Bauelement 6, das als Strahlungsdetektor in einer Lichtsensoreinheit 3 gemäß Fig. 1 und somit als Komponente der Verglasungseinheit 1 eingesetzt werden kann. Das Fotodioden-Bauelement 6 hat einen Träger 6a, eine Halbleiterdiode 6b mit einem fotoaktiven Bereich (strahlungsempfindlichen Detektionsabschnitt) 6c und eine transparente Abdeckung 6d der Halbleiterdiode 6b. Es ist zu verstehen, dass dies lediglich eine sehr schematische Darstellung als Basis der nachfolgenden Erläuterung der Erfindung ist und diese ebenso bei Strahlungsdetektoren mit gänzlich anderem Aufbau einsetzbar ist, vorausgesetzt, dass diese einen geometrisch klar bestimmten Detektionsabschnitt haben.

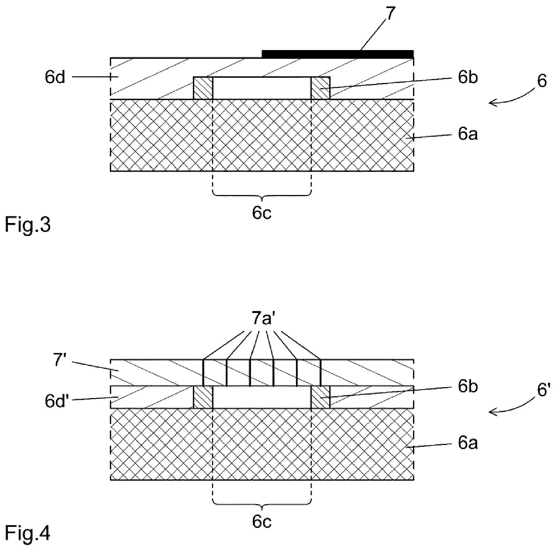

Fig. 3 zeigt in einer an Fig. 2A angelehnten Querschnittdarstellung als Beispiel eines Strahlungsdetektors in erfindungsgemäßer Ausgestaltung wiederum ein Fotodioden-Bauelement 6. Dieses hat den in Fig. 2A und 2B gezeigten Grundaufbau aus einem Träger 6a, einer Halbleiterdiode 6b mit fotoaktivem Bereich 6c und einer transparenten Abdeckung 6d. Über einer Teilfläche des fotoaktiven Bereiches 6c ist auf die Oberfläche der transparenten Abdeckung 6d eine geschlossene flächige strahlungsdichte Deckschicht 7, beispielsweise mittels eines Druckverfahrens oder auch als aufgeklebte Deckschicht, aufgebracht

Wie anhand von Figur 3 leicht zu verstehen ist, blockiert die Deckschicht 7 einen (bezogen auf die Zeichnung) von rechts kommenden Lichteinfall bis zu einem bestimmten Einfallswinkel vollständig und lässt ihn bei größerem Einfallswinkel (nahe 90°) nur auf einen Teilbereich des fotoaktiven Bereiches 6c auftreffen. Hingegen erreicht von links einfallendes Licht bis zu einem bestimmten Einfallswinkel den gesamten fotoaktiven Bereich, und bei Einfallswinkeln nahe 90° erreicht von links kommendes Licht zumindest eine Teilfläche des fotoaktiven Bereiches und wird dort in Spannung umgewandelt. Letztlich generiert das Fotodiodenelement 6 also ein Ausgangssignal in Abhängigkeit nicht nur von der Beleuchtungsstärke, sondern auch von der Richtung des Lichteinfalls.

Fig. 4 zeigt eine Ausgestaltung, welche nicht Teil der Erfindung ist, wobei ein Fotodioden-Bauelement 6` mit weitgehend gleichem Grundaufbau wie in Fig. 2A/2B und Fig. 3 gezeigt. Jedoch ist hier eine zweiteilige Abdeckung vorhanden, die eine erste (transparente oder undurchlässige) Abdeckschicht 6d` und eine darüber liegende zweite Abdeckschicht 7` umfasst. In jene zweite Abdeckschicht 7` ist eine lamellenartige Struktur aus senkrecht zur Oberfläche des fotoaktiven Bereiches 6c ausgerichteten lichtundurchlässigen bzw. reflektierenden Streifen 7a` eingearbeitet. Es ist zu verstehen, dass jene Streifen einen seitlichen Lichteinfall auf den fotoaktiven Bereich 6c unterbinden, während ein Lichteinfall unter relativ großen Winkeln auf den fotoaktiven Bereich 6c durchgelassen wird und dort eine elektrische Spannung erzeugt. Bei diesem Beispiel eines Strahlungsdetektors wird also nur ein weitgehend frontaler Strahlungseinfall registriert, während ein (bezogen auf die Zeichnungsebene) seitlicher Lichteinfall unterhalb bestimmter Einfallswinkel praktisch blockiert wird. Es versteht sich, dass der blockierte Raumbereich bzw., anders formuliert, der Raumbereich, in dem der Strahlungsdetektor seine Empfindlichkeit behält, von der geometrischen Konfiguration der lamellenartigen Struktur der zweiten Abdeckschicht 7` abhängig ist.

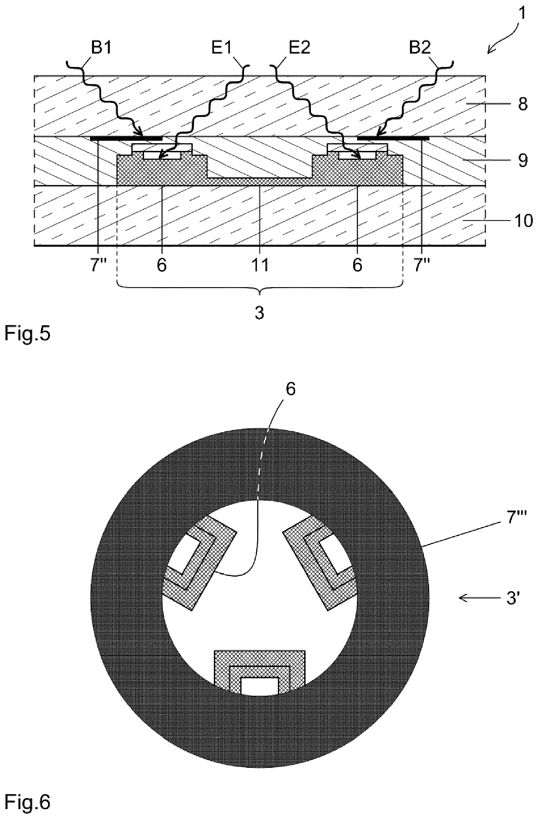

Fig. 5 zeigt in einer Querschnittdarstellung schematisch den Aufbau der Windschutzscheibe 1 aus Fig. 1 mit integrierter Lichtsensoreinheit 3 in erfindungsgemäßer Ausgestaltung. Die Verglasungseinheit 1 umfasst eine Außenscheibe 8, eine thermoplastische Zwischenschicht 9 und eine Innenscheibe 10 sowie üblicherweise Klebstoffschichten (nicht gesondert bezeichnet) beidseits der thermoplastischen Zwischenschicht 9. Als Lichtsensoreinheit 3 sind hier zwei Fotodioden-Bauelemente 6 der oben beschriebenen Art vorgesehen, die hier auf einem gemeinsamen (Sekundär-)träger 11 in die thermoplastische Zwischenschicht 9 eingebettet sind.

Gemäß dem weiter oben allgemein und unter Bezugnahme auf Fig. 3 etwas spezieller beschriebenen Funktionsprinzip des Vorsehens einer partiellen strahlungsdichten Abdeckung über einem Teilbereich des strahlungsempfindlichen Detektionsabschnitts ist hier schräg oberhalb jedes der Fotodioden-Bauelemente 6 auf die Innenfläche der Außenscheibe 8 eine geometrisch vorbestimmte Abdeckung 7" aufgedruckt. Deren Erstreckung bezüglich des (hier nicht bezeichneten) Detektionsabschnittes des entsprechenden Strahlungsdetektors bzw. Fotodioden-Bauelementes 6 ist derart gewählt, dass wiederum seitliche Einstrahlung bis zu einem vorbestimmten Winkel (symbolisiert durch die Pfeile B1 bzw. B2 für das linke bzw. rechte Fotodioden-Bauelement) blockiert wird und Strahlung aus den übrigen Raumbereichen (hier symbolisiert durch die Pfeile E1 bzw. E2 für das linke bzw. rechte Fotodioden-Bauelement) gelangt hingegen zum Detektionsabschnitt und wird somit für das Detektionssignal wirksam.

Durch geeignete geometrische Konfiguration der Strahlungsdetektoren (Fotodioden-Bauelemente) und zugehörigen Abdeckungen lässt sich somit ein Erfassungsbereich von einfallendem Licht oder Infrarot- oder UV-Strahlung festlegen, in welchem die Lichtsensoreinheit 3 auf Strahlungseinfall anspricht. Dies kann in einer nachgeordneten Auswertungseinheit entsprechend ausgewertet und in ein geeignetes Steuersignal für eine Funktionsbaugruppe umgesetzt werden, die eine Funktion des PKW in Abhängigkeit von dem gerichteten Lichteinfall steuert.

Fig. 6 zeigt in einer schematischen Draufsicht als weitere Ausführung der Erfindung eine Lichtsensoreinheit 3' als Bestandteil einer (hier nicht dargestellten) Verglasungseinheit, die drei Fotodioden-Bauelemente oder ähnliche Strahlungsdetektoren 6 in einer um jeweils 120° versetzten Anordnung auf einer gedachten Kreislinie zeigt. Den Strahlungsdetektoren 6 gemeinsam ist eine kreisringförmige strahlungsdichte Abdeckung 7‴ zugeordnet, d.h. die Abdeckungen der Strahlungsdetektoren werden durch eine gemeinsame Abdeckung 7‴ bzw. Schicht gebildet. Diese hat im Wesentlichen die oben unter Bezugnahme auf Fig. 3 und Fig. 5 beschriebene Wirkung, durch das Vorsehen der drei Strahlungsdetektoren lässt sich jedoch eine weiter verbesserte Richtwirkung der Lichtsensoreinheit erzielen.

Wie bei der Ausführung nach Fig. 5 kann die strahlungsdichte Abdeckung durch Siebdruck auf der Innenfläche einer einzelnen Scheibe oder Außenscheibe einer Verglasungseinheit erzeugt werden, und zwar in vorteilhafter Weise in einem einzigen Siebdruckschritt zusammen mit weiteren Druckelementen oder -bereichen, die aus anderen Gründen auf der Scheibe erzeugt werden. Dies ermöglicht eine höchst effiziente und kostengünstige Realisierung der Erfindung.

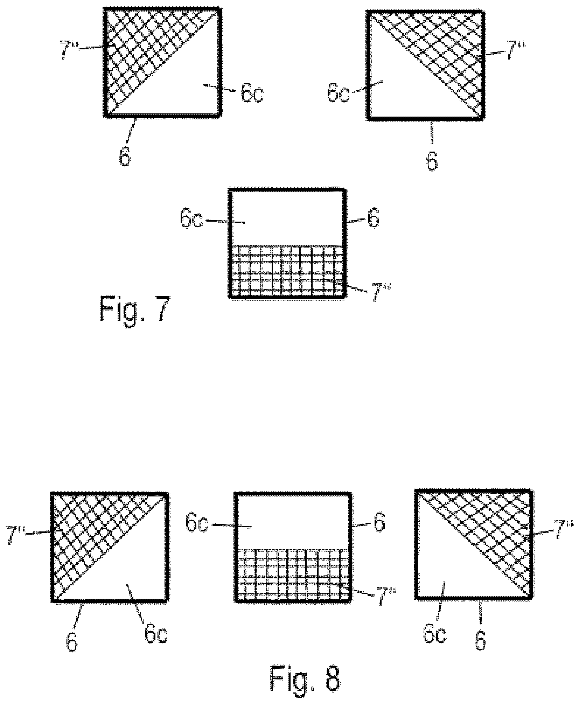

In Figur 7 ist als eine weitere Ausführung, welche in den Patentansprüchen nicht beansprucht ist, eine Lichtsensoreinheit 3' als Bestandteil einer (hier nicht dargestellten) Verglasungseinheit gezeigt, die wie in Fig. 6 drei Fotodioden-Bauelemente oder ähnliche Strahlungsdetektoren 6 in einer versetzten Anordnung, beispielsweise in einer um jeweils 120° versetzten Anordnung auf einer gedachten Kreislinie, aufweist. Die Strahlungsdetektoren 6 haben hier beispielsweise eine selbe Ausrichtung von deren Gehäusen. Die Strahlungsdetektoren 6 weisen jeweils individuelle Abdeckungen 7" auf, die beispielsweise in die Strahlungsdetektoren 6 integriert sind. Wie gezeigt, decken die Abdeckungen 7" die Strahlungsdetektoren 6 jeweils etwa zur Hälfte ab, wobei gleichermaßen ein größerer oder kleinere Anteil der Strahlungsdetektoren abgedeckt sein kann. Die Mittelachsen der Raumbereiche (Raumwinkel) der Strahlungsdetektoren sind zumindest in der Projektion auf die Ebene der Strahlungsdetektoren 6 jeweils in einem Winkel von 120° versetzt zueinander angeordnet.

In Figur 8 ist als eine weitere Ausführung, welche in den Patentansprüchen nicht beansprucht ist, eine Lichtsensoreinheit 3' als Bestandteil einer (hier nicht dargestellten) Verglasungseinheit gezeigt, welche sich von Figur 7 nur dadurch unterscheidet, dass die drei Strahlungsdetektoren 6 entlang einer geraden Linie angeordnet sind.

Die Ausführung der Erfindung ist nicht auf die oben beschriebenen Beispiele und Aspekte beschränkt, sondern ebenso in einer Vielzahl von Abwandlungen möglich, die innerhalb des Gegenstands der nachfolgenden Ansprüche liegen.

### Bezugszeichenliste

- 1: Verglasungseinheit (Frontscheibe)
- 2: PKW
- 3,3': Lichtsensoreinheit
- 4: Auswertungseinheit
- 5: Steuerbaugruppe
- 6, 6`: Fotodioden-Bauelement (Strahlungsdetektor)
- 6a: Träger
- 6b: Halbleiterdiode
- 6c: fotoaktiver Bereich (strahlungsempfindlicher Detektionsabschnitt)
- 6d: transparente Abdeckung
- 6d`: erste Abdeckschicht
- 7, 7‴: kreisringförmige Abdeckung
- 7`: zweite Abdeckschicht
- 7": strahlungsdichte Abdeckung (Deckschicht)
- 7a`: lichtundurchlässige bzw. reflektierende Streifen
- 8: Außenscheibe
- 9: thermoplastische Zwischenschicht
- 10: Innenscheibe
- 11: Sekundärträger

## Patentansprüche

1. Verglasungseinheit (1) eines Fahrzeugs (2) oder Gebäudes, mit mindestens einer strahlungsdurchlässigen Glas- oder Kunststoffscheibe (8) und mindestens einem auf einer Seite der Glas- oder Kunststoffscheibe angeordneten Strahlungsdetektor (6), wobei über einem strahlungsempfindlichen Detektionsabschnitt (6c) eines jeweiligen Strahlungsdetektors (6) eine partielle strahlungsdichte Abdeckung (7"; 7‴) derart angeordnet ist, dass diese das Auftreffen von Strahlung aus mindestens einem vorbestimmten Raumbereich des Strahlungseinfalls auf dem Detektionsabschnitt blockiert, wobei die strahlungsdichte Abdeckung als geschlossene flächige Abdeckung (7"; 7‴) mit Abstand über einer Teilfläche des Detektionsabschnitts (6c) des Strahlungsdetektors (6) ausgeführt ist, **dadurch gekennzeichnet, dass** eine Strahlungsdetektor-Gruppe aus nur drei Strahlungsdetektoren (6) vorgesehen ist, deren Abdeckungen (7"; 7‴) derart aufeinander abgestimmt bezüglich des jeweiligen Strahlungsdetektors platziert sind, dass für die einzelnen Strahlungsdetektoren Strahlungseinfall aus unterschiedlichen Raumbereichen blockiert wird,
wobei die Strahlungsdetektoren (6) mit gleichen Winkelabständen zueinander versetzt auf einer Kreislinie angeordnet sind,
wobei die Verglasungseinheit (1) eine Außenscheibe (8) und eine Innenscheibe (10), die über eine thermoplastische Zwischenschicht (9) miteinander verbunden sind, umfasst, wobei die Strahlungsdetektoren (6) in die Zwischenschicht eingelagert sind und die Abdeckungen (7", 7‴) auf der Innenfläche der Außenscheibe oder auf der Außenseite der Zwischenschicht angeordnet sind, und
wobei die Abdeckungen (7", 7‴) der Strahlungsdetektoren (6) durch eine einzelne zusammenhängende, ringförmige Schicht (7‴) gebildet werden.

2. Verglasungseinheit nach Anspruch 1, wobei mindestens einer der Strahlungsdetektoren (6) eine andere spektrale Empfindlichkeit als die übrigen Strahlungsdetektoren aufweist.

3. Verglasungseinheit nach Anspruch 1 oder 2, wobei die strahlungsdichten Abdeckungen (7"; 7‴) mittels eines Masken-Beschichtungsverfahrens, insbesondere im Siebdruckverfahren, erzeugt sind.

4. Verglasungseinheit nach einem der vorangehenden Ansprüche 1 bis 3, wobei jeder Strahlungsdetektor (6; 6') als Fotodetektor für sichtbares Licht und/oder als IR-Detektor für Infrarotstrahlung und/oder als UV-Detektor für UV-Strahlung ausgeführt ist.

5. Verglasungseinheit nach einem der vorangehenden Ansprüche 1 bis 4, wobei die Strahlungsdetektoren (6) auf einem gemeinsamen Träger (11) angeordnet sind.

6. Verglasungsanordnung eines Fahrzeugs oder Gebäudes, umfassend eine Verglasungseinheit (1) nach einem der Ansprüche 1 bis 5 und eine mit dem Ausgang jedes Strahlungsdetektors (6) verbundene Auswertungseinheit (4), die zur verknüpften Auswertung der Signale der mehreren Strahlungsdetektoren (6) der Strahlungsdetektor-Gruppe zur Bestimmung der Richtung des Strahlungseinfalls auf die Verglasungseinheit ausgebildet ist.

7. Fahrzeug (2) oder Gebäude, mit einer Verglasungseinheit (1) nach einem der Ansprüche 1 bis 5 oder einer Verglasungsanordnung nach Anspruch 6.

## Claims

1. Glazing unit (1) of a vehicle (2) or building, comprising at least one radiation-transmitting glass or plastic pane (8) and at least one radiation detector (6) arranged on one side of the glass or plastic pane, wherein a partial radiation-tight cover (7"; 7‴) is arranged above a radiation-sensitive detection section (6c) of a respective radiation detector (6) in such a way that it blocks the impingement of radiation from at least one predetermined spatial region of the radiation incidence on the detection section, the radiation-tight cover being in the form of a closed planar cover (7"; 7") spaced over a partial surface of the detection section (6c) of the radiation detector (6), **characterized in that** a radiation detector group of only three radiation detectors (6) is provided, the covers (7"; 7‴) of which are placed coordinated with one another with respect to the respective radiation detector in such a way that radiation incidence from different spatial regions is blocked for the individual radiation detectors, wherein the radiation detectors (6) are arranged with equal angular distances offset from each other on a circular line, wherein the glazing unit (1) comprises an outer pane (8) and an inner pane (10) joined together by a thermoplastic intermediate layer (9), wherein the radiation detectors (6) are embedded in the intermediate layer and the covers (7", 7‴) are arranged on the inner surface of the outer pane or on the outer surface of the intermediate layer, and wherein the covers (7", 7‴) of the radiation detectors (6) are formed by a single continuous annular layer (7‴).

2. Glazing unit according to claim 1, wherein at least one of the radiation detectors (6) has a different spectral sensitivity than the other radiation detectors.

3. Glazing unit according to claim 1 or 2, wherein the radiation-tight covers (7"; 7‴) are produced by means of a mask coating process, in particular by screen printing.

4. Glazing unit according to any of the preceding claims 1 to 3, wherein each radiation detector (6; 6') is configured as a photodetector for visible light and/or as an IR detector for infrared radiation and/or as a UV detector for UV radiation.

5. Glazing unit according to any of the preceding claims 1 to 4, wherein the radiation detectors (6) are arranged on a common carrier (11).

6. Glazing arrangement of a vehicle or building, comprising a glazing unit (1) according to any one of the claims 1 to 5, and an evaluation unit (4) connected to the output of each radiation detector (6), which evaluation unit (4) is configured to evaluate the signals of the plurality of radiation detectors (6) of the radiation detector group in a linked manner to determine the direction of incidence of radiation on the glazing unit.

7. Vehicle (2) or building, comprising a glazing unit (1) according to any one of claims 1 to 5 or a glazing arrangement according to claim 6.

## Revendications

1. Unité de vitrage (1) d'un véhicule (2) ou d'un bâtiment, comprenant au moins une vitre en verre ou en matière plastique (8) transmettant le rayonnement et au moins un détecteur de rayonnement (6) disposé sur un côté de la vitre en verre ou en matière plastique, dans lequel un couvercle partiel étanche au rayonnement (7"; 7‴) est disposé au-dessus d'une section de détection sensible au rayonnement (6c) d'un détecteur de rayonnement (6) respectif de manière à bloquer l'impact du rayonnement provenant d'au moins une région spatiale prédéterminée de l'incidence du rayonnement sur la section de détection, le couvercle étanche au rayonnement se présentant sous la forme d'un couvercle plan fermé (7"; 7") espacé sur une surface partielle de la section de détection (6c) du détecteur de rayonnement (6), **caractérisé en ce qu'**un groupe de détecteurs de rayonnement composé de seulement trois détecteurs de rayonnement (6) est prévu, les couvercles (7' ; 7'") sont placés en coordination les uns avec les autres par rapport au détecteur de rayonnement respectif de manière à bloquer l'incidence du rayonnement provenant de différentes régions spatiales pour les différents détecteurs de rayonnement, les détecteurs de rayonnement (6) étant disposés à des distances angulaires égales les uns par rapport aux autres sur une ligne circulaire, dans lequel le vitrage (1) comprend une vitre extérieure (8) et une vitre intérieure (10) reliées par une couche intermédiaire thermoplastique (9), dans lequel les détecteurs de rayonnement (6) sont intégrés dans la couche intermédiaire et les couvercles (7", 7'") sont disposés sur la surface intérieure de la vitre extérieure ou sur la surface extérieure de la couche intermédiaire, et dans lequel les couvercles (7", 7‴) des détecteurs de rayonnement (6) sont constitués d'une seule couche annulaire continue (7'").

2. Unité de vitrage selon la revendication 1, dans lequel au moins un des détecteurs de rayonnement (6) a une sensibilité spectrale différente de celle des autres détecteurs de rayonnement.

3. Unité de vitrage selon la revendication 1 ou 2, dans lequel les couvercles étanches aux rayonnements (7"; 7‴) sont produites au moyen d'un procédé de revêtement de masque, en particulier par sérigraphie.

4. Unité de vitrage selon l'une quelconque des revendications précédentes 1 à 3, dans laquelle chaque détecteur de rayonnement (6; 6') est configuré comme un photodétecteur pour la lumière visible et/ou comme un détecteur IR pour le rayonnement infrarouge et/ou comme un détecteur UV pour le rayonnement UV.

5. Unité de vitrage selon l'une des revendications précédentes 1 à 4, dans lequel les détecteurs de rayonnement (6) sont disposés sur un support commun (11).

6. Disposition du vitrage d'un véhicule ou d'un bâtiment, comprenant une unité de vitrage (1) selon l'une quelconque des revendications 1 à 5, et une unité d'évaluation (4) connectée à la sortie de chaque détecteur de rayonnement (6), cette unité d'évaluation (4) étant configurée pour évaluer les signaux de la pluralité de détecteurs de rayonnement (6) du groupe de détecteurs de rayonnement de manière liée afin de déterminer la direction d'incidence du rayonnement sur le vitrage.

7. Véhicule (2) ou bâtiment comprenant une unité de vitrage (1) selon l'une quelconque des revendications 1 à 5 ou un disposition due vitrage selon la revendication 6.
